# EUROPEAN PATENT SPECIFICATION

(11) **EP 1 283 676 B1**
(45) Date of publication and mention of the grant of the patent: **15.02.2006**
(21) Application number: 01937885.0
(22) Date of filing: 24.05.2001
(51) Int. Cl.: A01N 63/02

(54) **A BIOINSECTICIDE FORMULATION CONSISTING OF BACILLUS THURINGIENSIS VAR ISRAELENSIS, AND ITS CONCERNING MANUFACTURE PROCEEDINGS**
BIOINSEKTIZIDE FORMULIERUNG ENTHALTEND BACILLUS THURINGIENSIS VAR ISRAELENSIS UND VERFAHREN ZU DERER HERSTELLUNG
FORMULATION BIOINSECTICIDE CONTENANT BACILLUS THURINGIENSIS VAR ISRAELENSIS ET PROCEDE DE FABRICATION CORRESPONDANT

(30) Priority: 24.05.2000 BR 0003314
(43) Date of publication of application: 19.02.2003
(73) Proprietor: FUNDACAO OSWALDO CRUZ (FIOCRUZ), 21045-900 Rio de Janeiro (BR)
(72) Inventor: GOMES SANCHES, Elizabeth, Recreio, Rio de Janeiro, RJ (BR); BATISTA DA SILVA, Ana Cristina, Piedade, Rio de Janeiro, RJ (BR); ABREU CAMPOS, Flávia Maria, Tijuca, Rio de Janeiro, RJ (BR); PINHEIRO ROBERG, Renata Alves, Tijuca, Rio de Janeiro, RJ (BR); DE ASSUNCAO, Fernando Justino, Bangu, Rio de Janeiro, RJ (BR)
(74) Representative: Stuttard, Garry Philip
(86) International application number: PCT/BR2001/000063
(87) International publication number: WO 2001/089297

(56) References cited:
- EP-A1- 0 235 875
- WO-A1-98/28984
- DE-A1- 4 133 889
- PATENT ABSTRACTS OF JAPAN vol. 15, no. 322 (C-861) & JP 03 127 706 A (TOAGOSEI CHEM IND CO LTD) 30 May 1991

## Description

The present invention relates to a bioinsecticide dry formulation consisting of the biomass and endotoxins of *Bacillus thuringiensis var israelensis,* which provides a practical, economical and effective larvicidal activity against Dipterous insects. This product has a good shelf life when stored and it contains ecologically safe additive agents, while the active component is present in amounts strong enough to produce a larvicidal activity.

In general, the extermination of insects, especially those harmful to agriculture, silviculture, and public health, involves the use of chemical insecticides. However, there are many drawbacks related to the use of this kind of product.

Chemical insecticides have a wide spectrum of action, being lethal not only to the target insects, but also to those that present some benefit to agriculture, silviculture and public health. In addition, such insecticides are quite often toxic, not only to animals but also to man, and can also pollute the environment. In addition, insects often develop organic resistance after repeated applications of chemical insecticides which makes extermination difficult.

The use of bioinsecticides is well known. Bioinsecticides make use of natural pathogenic agents or drugs produced by these pathogenic agents to combat insects in a much more effective and selective way than chemical insecticides and they have a narrower spectrum of action, killing only target insects. They are also degraded naturally and are therefore not so harmful to the environment.

A bioinsecticide widely employed in the biological control of insects producing diseases is made from *Bacillus thuringiensis* (Bt). Bt is a mobile, gram-positive bacterium which may be found in nature in the form of little rods ("*batonettes*"). This microorganism provides endotoxins lethal to some insects, in the form of crystal parasporal inclusions produced during sporulation which cause death to the insects after ingestion.

These inclusions may vary in shape, number and composition, being made up of one or more proteins named delta-endotoxins that may vary between 27-140 kDa. In the insect's gastrointestinal tract, these proteins undergo alkaline and enzymatic degradation and cause systemic and intestinal paresis causing death of the insect. Delta-endotoxins are easily degraded and differ from other toxic substances because they have a specific toxic effect. In other words, they do not affect organisms other than the target insects. (Heimpel, A.M.; ANn. Ver, Entomology 12, 287-322, 1967. Hofte and Whiteley, Microbiological Reviews 53, 242-255, 1989).

Among strains of *Bacillus thuringiensis* isolated from nature, the variety *Bacillus thuringiensis var israelensis* (Bti) has been commonly used against Dipterous insects whose extermination is very important for public health (Payne et al, US 5 888 976, 1999). Such insects are able to transmit Yellow Fever and Dengue, for example *Aedes aegypti.*

A practical, economical and effective utilization of bioinseticides (like the one obtained from *Bacillus thuringiensis var israelensis*) is dependent on the amount of active component present in the entire bioinsecticide formulation.

Commonly used bioinsecticide formulations may provide a biomass of Bti, or its spores or its isolated endotoxins. These formulations require good stability (shelf life) and, therefore, they must include in their composition substances able to prevent degradation of the active component by chemical, biological, physical or natural agents (sunlight, for instance).

The document BR PI 8900938-0 discloses bioinsecticide compositions made of amylolytic and proteolytic bacterium of genus *Bacillus* which are lethal to insects of different classes. They involve bioinsecticide compositions made of *Bacillus thuringiensis var israelensis* which are toxic to Dipterous insects and inert liquids, such as sorbitol, glycerol, toluol, which together with the active biomass give the product a pasty consistency.

However, a pasty formulation has a high specific gravity and it tends to remain on the bottom of the application area. This is a drawback, especially in the case of target insects feeding and reproducing in areas near surfaces (like Dipterous insects) where the active component does not remain dispersed in the medium for enough time to be effective.

WO-A-98/28984 suggests a composition, lethal to Dipterous insect larvae, dispensed in a frozen granulated form. However, as it is frozen, such a formulation is not effective in places with hot weather (where there are many Dipterous insects) once it melts. Moreover, this formulation is not practical because it requires low temperatures during storage and transportation.

Thus, in order to get an effective larvicidal activity, it is necessary to use bioinsecticide formulations providing a high dispersion of active components in the application area. This way, it becomes easier to apply the correct dose i.e. the lethal dose of bioinsecticide.

Whilst preparing bioinsecticide compositions, it is also very important to take into account not only the biology of the target insect, but also its habitat because the environmental conditions (temperature, pH, presence of metals, solid materials in suspension, specific gravity, and so on) may change the performance of these compositions. Therefore, the features of a formulation, such as physical form and delivery vehicle are very important for the effectiveness of the active ingredient.

In addition, one needs bioinsecticide formulations characterized by a high level of dispersion of the active component in the reproducing and feeding areas of target insects, whilst being easily stored, packed, transported and used.

Dry bioinsecticide formulations are an alternative way to solve these problems, as they are easy to store, to pack, to be taken to the infested areas (even those hard to get to) and to use, while fulfilling all the requirements related to having a high homogenization of active component in the application area.

DE-A-4133889 is related to a dry bioinsecticide dispensed as effervescent tablets which are used against Dipterous insects. However, despite the fact that the active component is homogeneously delivered, there are no additives to reduce its degradation over time.

A formulation able to kill all larvae over a period of time is important for an effective larvicidal activity. This long-term action of active component, together with a high grade of dispersion in the application area, allows easy administration of the correct dose and fewer applications. This is an important factor from an economic and practical point of view, especially for locations which are hard to get to.

EP-A-761096, EP-A-0236875 and US-A-5560909 disclose examples of how to get dry bioinsecticide formulations made from bacterium genus *Bacillus* that stay active in the feeding and reproduction areas of the target insects (e.g. Dipterous insects) for a long time, giving effective biological control of the insects, even in the case of mosquito larvae. However, such formulations may require non-biodegradable polymer compounds or other environmentally harmful compounds.

Thus it is necessary to produce a bioinsecticide dry formulation having suitable carrier additives which cause effective biological control of Dipterous insects through the long-term action of the active component dispersed in the application area which is not harmful to the environment. This bioinsecticide should be practical, economical, effective and also ecologically safe.

The principal aim of the present invention is to afford a dry bioinsecticide composition based on the biomass and endotoxins of *Bacillus thuringiensis var israelensis* which is characterized by its practicability, economy and efficacy in controlling Dipterous insects, being at the same time ecologically safe.

Thus viewed from one aspect the present invention provides a bioinsecticide dry formulation comprising: the biomass and endotoxins obtained from *Bacillus thuringiensis var israelensis* (Bti) with toxic activity against Dipterous insects said formulation in the form of a dry powder with a toxic activity between 500-1500 ITU (International Toxic Units)/mg dry powder said formulation further comprising additives being chemical dryers, dispersing agents, agglutinant/humectant agents and protectors against sunlight.

A first embodiment of this invention is related to a bionsecticide formulation dispensed as dry powder or tablets, comprising additives carrying the endotoxins (whether pure or not) selected in a way to afford a high dispersion of the active component in the application area but bringing about no risks to the environment.

Viewed from a further aspect the present invention provides a process for the preparation of a bioinsecticide formulation with toxic activity against Dipterous insects comprising:
I. growth of *Bacillus thuringiensis var israelensis* by means of fermentation in a suitable growth medium, where the unused metabolites/nutrients are not harmful to the environment and they may be used on an industrial scale;
II. recovery of toxic biomass or its spores or only endotoxins from step (I) by means of a suitable process of recuperation able to retain the toxic activity of endotoxins whether pure or not;
III. sequential addition of chemical dryers and other additives being dispersing agents, agglutinant/humectant agents and protectors against sunlight to the toxic biomass or to its spores or to the endotoxins recovered in step (II) and optional dehydration between adding the chemical dryers and the other additives;
IV. dehydration of the blend from step (III) by means of a process able to retain the toxic activity of endotoxins whether pure or not in order to obtain a formulation as a dry powder;
V. optional addition of diluents, lubricants and neutralizing agents to the dry powder from step (IV) in order to obtain tablets.

The principal aim of this invention is to afford a dry, formulation consisting of endotoxins of *Bacillus thuringiensis var israelensis,* presenting an effective larvicidal activity against Dipterous insects and characterized to be practical, economical and cause no harm to the environment.

For a more complete understanding, we set forth below the meanings of terms used herein:
1.Effective larvicidal activity: being able to kill 100% larvae within a minimum residency time in the application area; having a good stability during storage (shelf life), keeping practically unchanged the initial larvicidal activity, comprising components able to prevent the active component from degradation by the physical, chemical and biological action of natural agents in the application area; comprising additives producing availability of active component at required levels for as long as possible (for instance, dispersing agents, substances that increase the humectant effect).
2.Economical larvicidal activity: resulting from its effectiveness in the biological control of Dipterous insects that would make the administration of a correct dose easier and long-term action of the active component which would reduce the number of applications required.
3.Practical larvicidal activity: being employed in places hard to get to and easily stored, packed, transported to the infested places.
4.No harm to the environment (ecologically safe): meaning no change to the ecological balance, acting in a selective way (lethal only to the target insects, and not harmful to the other ones existing in the application area); being biodegradable within a suitable time, not to cause deposition of detritus, non-toxic to the fauna and flora in the application area; no clouding in order to avoid a possible imbalance in the environmental oxygenation; providing no metabolites and/or nutrients unused when manufacturing the toxic biomass which would be harmful to fauna and flora in the application area.

Isolation and growth of *Bacillus thuringiensis var israelensis* and the fermentation phase may be carried out in conditions known from technical literature to obtain the active biomass.

The fermentation medium must provide:
a) Nitrogen source substances selected from the group consisting of industrial remains rich in proteins, soya proteins, urea, yeast extract.
b) Carbon source substances selected from the group consisting of mannitol, dextrose and sucrose.
c) Micronutrients source substances selected from blends of salts including MgSO₄, MnSO₄, ZnSO₄, FeSO₄, and CaCl₂.
d) Sodium chloride employed to maintain cell viability.

The selection of the most suitable growth medium is of prime importance to obtain a bioinsecticide on an industrial scale. Additionally, in case of formulations whose endotoxin is not purified (isolated), the components of growth medium are to be chosen in such a way that their remains are not harmful to the environment.

In the present invention, the components of growth medium are selected in a way to satisfy the ratio between the possibility of utilization on an industrial scale and the minimization of lethal effects caused by the fermentation remains.

For the accomplishment of this invention, the growth medium of choice is made up of: amino-fertile (1,5 - 3,0% w/w), soya protein (1,0 - 1,5% w/w), urea (0,1 - 0,2% w/w), mannitol (0,6 - 0,8% w/w), sodium chloride (0,1 - 0,2% w/w) besides a blend of salts (0,05 - 0,08% w/w) according to Table 1.

**Table 1: Components and their respective concentrations:**

| COMPONENTS | CONCENTRATION (% w/w) |
|---|---|
| Mg SO₄ | 65.1 % |
| Mn SO₄ | 4.4 % |
| Zn SO₄ | 4.4% |
| Fe SO₄ | 4.4 % |
| Ca Cl₂ | 21.7% |

In such conditions, the cell viability is 1.8-3.8 x 10¹⁰ cfu (colonies forming units)/ml.

At the end of fermentation, the resulting solid material that makes up the toxic biomass includes Bti endotoxins, spores, torn and unchanged cells, as well as solid remains arising from the fermentation and the resulting metabolites.

In the present invention, both the toxic biomass of Bti, and its spores or pure endotoxins may be used as bioinsecticides formulations (being recovered by methods commonly used) since they are not harmful to the effectiveness of the active component (endotoxin) whether pure or not.

Toxic biomass may be recovered, for instance, through centrifugation using membranes (amongst others).

After recovering endotoxins of *Bacillus thuringiensis var israelensis*, whether pure or not, one begins to develop the bioinsecticide dry formulation (dispensed as dry powder) comprising:
a)endotoxins, whether pure or not of *Bacillus thuringiensis var israelensis.*
b)chemical dryers.
c)dispersing agents.
d)agglutinant/humectant agents.
e)protectors against sunlight.

This way, the active biomass of Bti or its recovered spores or even its purified endotoxins are blended with chemical dryers (selected from diatomite, bentonite, calcium phosphate, calcinated silica, (for instance, Cab-o-sil®), diatomaceous earth, calcite, clay, silica, kaolin, dolomite, leucite, and montmorillonite).

In one preferred embodiment of the present invention, the chemical dryers chosen are: dolomite, bentonite, calcium phosphate and Cab-o-sil®. Such dryers are, by preference, within a ratio of 0.1-10% w/w.

Dispersing agents such as methylcellulose, ammonium and calcium alginate, sodium alginate, lactose, and carboxymethylcellulose, are employed together with agglutinant/humectant agents (for instance polyoxyethylenes stearates (e.g. Mirj 45®) sodium laurylsulfate and monoleate of polyoxyethylenes sorbitans).

The active component of this present invention (Bti endotoxins whether pure or not) is also protected against degradation caused by sunlight. Such protection may be obtained by blending the active component with watersoluble agents. Alternatively, the particles of the active component may be coated with protecting agents such as TiO₂ as shown in WO-A-98/15183.

The dispersing and agglutinant agents used in one preferred embodiment of the present invention are (respectively) methylcellulose and Mirj 45®. By preference, they are present in a ratio of 0.1-10% w/w.

The blend of active biomass or spores or pure endotoxins with additives must be carried out sequentially followed by dehydration. Between the stages of addition of chemical dryers and other additives (dispersing, agglutinant/humectant agents and protectors against sunlight), a dehydration step may be carried out.

Dehydration may be carried out by known drying techniques suitable for industrial scale such as drying with or without forced ventilation, drying by rotative vaporizer/sprinkler and freeze-drying thereby avoiding degradation of the active component on account of high temperatures.

The final blend is then ground until a dry powder is obtained whose particle size must be between 50-100 mesh and humidity grade of about 5-15% w/w. For accomplishment of this invention, the ranges of choice are 60-80 mesh and 9-11% w/w for particle size and humidity respectively.

In this invention, the bioinseticide formulation dispensed as powder provides a toxic activity between 500-1500 TIU (Toxic International Units)/mg expressed in dry powder and is one of the applications of choice for the biological control of Dipterous insects. Expressed in biomass terms, this toxic activity is equivalent to 10⁸ - 10¹² cfu (colonies forming units)/g toxic biomass.

In one preferred embodiment of this invention, such bioinsecticide formulations are dispensed as 100-200 mg tablets (made from the dry powder) comprising:
a)endotoxins, whether pure or not of *Bacillus thuringiensis var israelensis*.
b)chemical dryers.
c)dispersing agents.
d)agglutinant/humectant agents.
e)protectors against sunlight.
f) diluents, lubricating and neutralizing agents.

Thus the formulation dispensed as dry powder (ie the formulation made up by blending components (a) to (e)) is put together with several additives such as neutralizing, diluents and lubricanting agents. Among neutralizing and diluent agents one finds sodium bicarbonate, micronized celluloses (Avicel®), mono-hydrated lactose, apatite, granulated mannitol, calcinated clay, kaolin, leucite, and talc. Lubricants may be polyethyleneglycols (PEG) with molecular weight between 2000 and 6000 and stearic acid.

In one preferred embodiment of the invention, neutralizing and diluent agents are sodium bicarbonate, Avicel®, and mono-hydrated lactose (by preference in a ratio of 10-70% w/w) and the lubricant agent corresponds to PEG 6000 (by preference within a range of 1-5% w/w).

In the present invention, the active components are within 5-25% of the final weight of the formulation dispensed as tablets.

In one preferred embodiment of this invention, the tablets have a formulation according to table 2.

**Table 2: Formulation of tablets:**

| COMPONENTS | PERCENTAGE (% w/w) |
|---|---|
| Active component | 10.0 - 20.0 |
| Micronized cellulose | 52.0 - 47.0 |
| Mono-hydrated lactose | 18.0 - 15.5 |
| Sodium bicarbonate | 18.0 - 16.0 |
| Atomized PEF 6000 | 2.0 - 1.5 |

The present invention is described in detail according to the following examples but is not limited thereto

### Example 1:

### Attainment of active biomass of Bacillus thuringiensis var israelensis:

The strain of *Bacillus thuringiensis var israelensis* IPS 82 was employed to get the active biomass.

The table 3 shows the fermentation medium used.

**Table 3: Fermentation medium:**

| RAW MATERIAL | PERCENTAGE (% w/w) |
|---|---|
| Amino-fertile * | 1.5 |
| Soya protein | 1.5 |
| Urea | 0.1 |
| Mannitol | 0.7 |
| Sodium chloride | 0.2 |
| Blend of salts | 0.06 |

| | |
|---|---|
| * Industrial remains rich in proteins. | |

The fermentation was carried out at 33°C for 24 hours. The assays have been developed in a scale of 50ml in 250ml Erlenmeyer's flasks by stirring in a shaker, within a range of 150-270 r.p.m.

The suitable cell viability was 3.8 x 10¹⁰ cfu (colonies forming units)/ml.

### Example 2:

### Recovering active biomass of Bacillus thuringiensis var israelensis:

After the fermentation step, the solid material (including Bti crystal protein), their spores, their torn and intact cells, as well as solid remains deriving from the fermentation medium were recovered by means of a bioseparation method by membrane vortex.

The operational conditions of this process are shown in table 4.

**Table 4: Operational Parameters - Bioseparation Method by Membrane Vortex.**

| Membrane | Mx10-poliacrilonitrile |
|---|---|
| Flow | 125 m/s |
| Pression | 23-26 psi |
| Torsion | 11-14 psi |
| Rotation | 2000 rpm |
| Time | 180 minutes |

A 20% yield over the initial volume of active mass is obtained.

### Example 3:

### Bioinsecticide formulation dispensed as Dry Powder:

The biomass recovered according to the procedure mentioned in the former example was blended with the chemical dryers diatomite, bentonite, tricalcium phosphate and Cab-o-sil® in the amounts showed in table 5.

**Table 5: Amount of Active Biomass and Chemical Dryers Employed in the Formulation Dispensed as Dry Powder.**

| SUBSTANCE | AMOUNT |
|---|---|
| Active biomass | 400 ml |
| Diatomite | 4 g |
| Bentonite | 2 g |
| Tricalcium phosphate | 2 g |
| Cab-o-sil® | 4 g |

Diatomite, bentonite, tricalcium phosphate and Cab-o-sil® were ground and homogenized. This blend was added to the Bti active mass under constant stirring. The resulting blend was dried in a stove at 37° C.

After 36 hours, the dry powder was ground in order to obtain a fine and homogeneous powder (called P) weighing 27.29 g. After this step, 0.5458g (2% of the weight of P) of previously ground methylcellulose was added to the dry powder. The resulting blend was then homogenized.

Separately, 0.2729g (1% total weigh of P) of Mirj® was heated in a water bath until complete fusion whilst adding stepwise 50 ml distilled water under vigorous stirring. To this solution was added the sun filter Eusolex 6007®.

The former solution was then poured slowly over the dry powder P blended with the methylcellulose. The resulting blend was homogenized and placed in a stove at 30°C for 24 hours.

The resulting dry powder (about 26.7 g) with a humidity grade of 10.83% w/w was ground and screened by means of a 70-mesh sieve (tamis).

The cellular concentration (estimated by means of the technique of counting plates) was 7 x 10¹¹ cfu (colonies forming units)/g toxic biomass.

Thus the bioinsecticide formulation based on *Bacillus thuringiensis var israelensis* dispensed as dry powder (P₁) was obtained.

### Example 4

### Bioinsecticide formulation dispensed as tablets:

The dry powder (P₁) obtained in the previous example was blended with the diluents Avicel PH102 and mono-hydrated lactose, with sodium bicarbonate (neutralizing agent) and also with atomized PEG6000 (lubricant). This blend of powders was put under a rotative compression and turned out into tablets of bioinsecticide.

We obtained 20 or 15 mg tablets comprising P₁ dry powder as active component.

Tables 6 and 7, show the amounts of agents employed to obtain 1 and 600 tablets respectively.

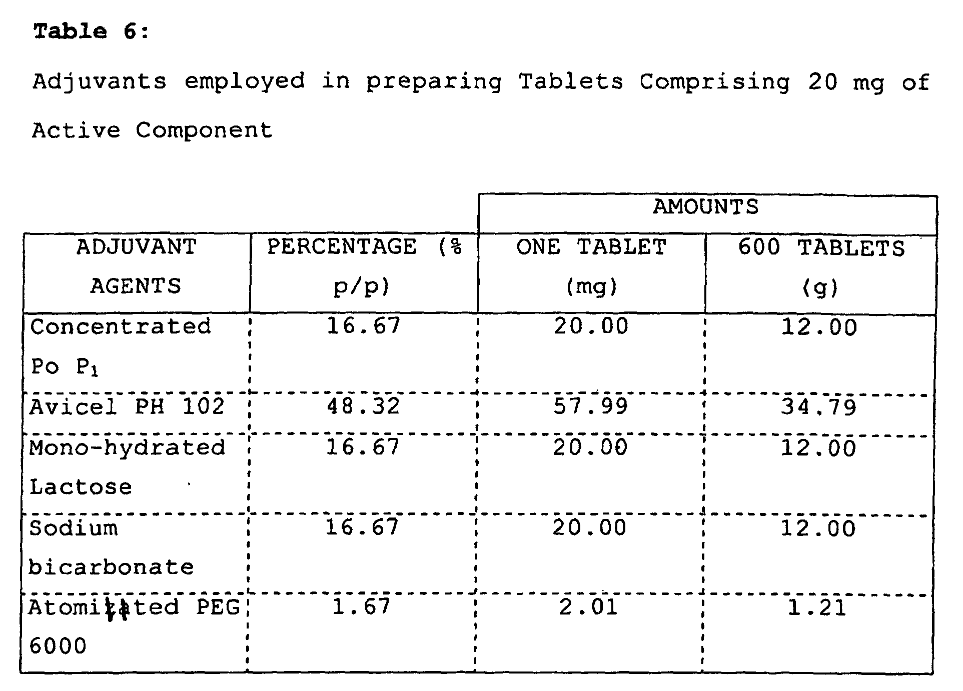

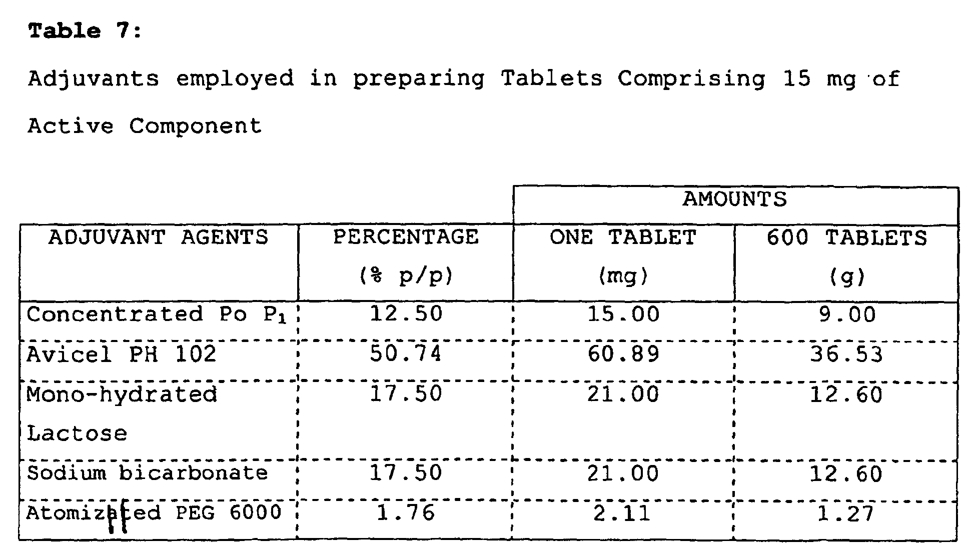

### Example 5:

### Assays against larvae of Aedes aegypti mosquito:

Tablets with 20 and 15 mg of the active component were tested for larvicidal activity against *Aedes aegypti* mosquito.

One tablet was placed in every 10 litres of water. By the periodic introduction of *Aedes aegytpti's* larvae, their mortality rate was estimated.

The results for both tablets revealed that the respective amounts of active component have shown an effective larvicidal activity giving a 100% mortality of larvae whilst remaining for up to 19 days in areas under sunlight and for 28 days in areas in the shade.

## Claims

1. A bioinsecticide formulation comprising the biomass of endotoxins obtained from Bacillus thuringiensis var israelensi (Bti) with toxic activity against Dipterous insect larvae, said formulation in the form of a dry powder with a toxic activity between 500-1500 ITU (International Toxic Units) /mg dry powder and comprising additives being:
chemical dryers selected from diatomaceous earth, calcite, clay, silica, kaolin, diatomite, bentonite, dolomite, calcium phosphate, leucite, montmorillonite and calcinated silica;
dispersing agents selected from calcium and ammonium alginate, sodium alginate, lactose, carboxymethylcellulose or methylcellulose,
agglutinant/humectant agents selected from sodium laurylsulfate, monoleate of polyoxyethylenes sorbitans and polyoxyethylenes stearates and
a protector against sunlight being EUSOLEX 6007^{R}.

2. A bioinsecticide formulation according to claim 1 wherein the chemical dryers are 0.1-10% w/w diatomite, 0.1-10% w/w bentonite, 0.1-10% w/w calcium phosphate and 0.1-10% w/w calcinated silica.

3. A bioinsecticide formulation according to claim 1 wherein the dispersing agent is methylcellulose at a weight in the range 0.1-10% w/w.

4. A bioinsecticide formulation according to claim 1 wherein the polyoxyethylenes stearates are present in a range of 0.1-10% w/w.

5. A bioinsecticide tablet comprising 5 to 25% of the formulation of claim 1 and neutralizing, diluents and lubricating agents.

6. A tablet according to claim 5 wherein the neutralizing and diluent agents have been selected from sodium bicarbonate, apatite, granulated mannitol, micronized cellulose or other celluloses, monohydrated lactose, kaolin, leucite and talc.

7. A tablet according to claim 6 wherein the neutralizing agent is sodium bicarbonate in a range of 10-70% w/w and the diluent agents are micronized cellulose and mono-hydrated lactose both in a range of 10-70% w/w.

8. A tablet according to claim 7 wherein the lubricating agent is polyethylene glycol 6000 in a range of 1-5% w/w.

9. A process for the preparation of a bioinsecticide formulation with toxic activity against Dipterous insect larvae comprising:
I. growth of Bacillus thuringiensis var israelensis by means of fermentation in a growth medium, where the unused metabolites/nutrients are not harmful to the environment and they may be used on an industrial scale, wherein said growth medium includes 1.5 - 3.0% w/w of amino-fertile, 1.0 - 1.5% w/w of soya protein, 0.1 - 0.2% w/w of urea, 0.6 - 0.8% w/w of mannitol, 0.1 - 0.2% w/w of sodium chloride and 0.05 - 0.08% w/w of a blend of salts constituted by 65,1% w/w of MgSO₄, 4.4 % w/w of MnSO₄, 4.4 % w/w of ZnSO₄, 4.4 % w/w of FeSO₄ and 21.7% w/w of CaCl₂;
II. recovery of toxic biomass or its spores or only endotoxins from step (I) by means of a suitable process of recuperation able to retain the toxic activity of endotoxins whether pure or not;
III. sequential addition of chemical dryers and other additives being dispersing agents, agglutinant/humectant agents and protectors against sunlight to the toxic biomass or to its spores or to the endotoxins recovered in step (II) and dehydration between adding the chemical dryers in step (III) and the other additives;
IV. dehydration of the blend from step (III) by means of a process able to retain the toxic activity of endotoxins whether pure or not in order to obtain a formulation as a dry powder;
V. optional addition of diluents, lubricants and neutralizing agents to the dry powder from step (IV) in order to obtain tablets.

10. A process according to claim 9 wherein the growth medium includes:
I. a nitrogen source being one or more substances selected from the group consisting of industrial remains rich in proteins, soya protein, urea, extract of yeast;
II. a carbon source being one or more substances selected from the group consisting of mannitol, dextrose and sucrose;
III. a micronutrients source being a blend of salts being MgSO₄, MnSO₄, FeSO₄ and CaCl₂;
IV. sodium chloride to retain cellular viability.

11. A process according to claim 9 wherein the recovery of toxic biomass in step (II) is carried out by bioseparation with membrane vortex.

12. A process according to claim 9 wherein dehydration is carried out in a stove at 30° C.

13. A process according to claim 9 wherein the tablets are obtained by rotative compression.

14. A process according to claim 12 wherein the addition of protectors against sunlight is carried out by means of a simple blending or by coating.

## Patentansprüche

1. Bioinsektizide Formulierung, umfassend die Biomasse und Endotoxine, erhalten von *Bacillus thuringiensis* var. *israelensis* (Bti) mit toxischer Aktivität gegen Larven zweiflügeliger Insekten, die genannte Formulierung in der Form eines trockenen Pulvers mit einer toxischen Aktivität zwischen 500-1500 ITU (Internationale Toxische Einheiten)/mg trockenes Pulver und folgende Additive umfassend:
chemische Trockenmittel, ausgewählt aus Diatomeenerde, Calcit, Ton bzw. Lehm, Siliciumdioxid, Kaolin, Diatomit, Bentonit, Dolomit, Calciumphosphat, Leucit, Montmorillonit und calciniertem Siliciumdioxid, Dispergiermittel, ausgewählt aus Calcium- und Ammoniumalginat, Natriumalginat, Lactose, Carboxymethylcellulose oder Methylcellulose, Bindemittel/Netzmittel, ausgewählt aus Natriumlaurylsulfat, Monooleat von Polyoxyethylensorbitanen und Polyoxyethylenstearaten und ein Schutzmittel gegen Sonnenlicht, das Eusolex 6007^{R} ist.

2. Bioinsektizide Formulierung nach Anspruch 1, wobei die chemischen Trockenmittel 0,1-10 % (G/G) Diatomit, 0,1-10 % (G/G) Bentonit, 0,1-10 % (G/G) Calciumphosphat und 0,1-10 % (G/G) calciniertes Siliziumdioxid sind.

3. Bioinsektizide Formulierung nach Anspruch 1, wobei das Dispergiermittel Methylcellulose mit einem Gewicht im Bereich von 0,1-10 % (G/G) ist.

4. Bioinsektizide Formulierung nach Anspruch 1, wobei die Polyoxyethylenstearate in einem Bereich von 0,1-10 % (G/G) vorhanden sind.

5. Bioinsektizide Tablette, umfassend 5-25 % der Formulierung nach Anspruch 1 und Neutralisierungsmittel, Verdünnungsmittel und Schmier- bzw. Gleitmittel.

6. Tablette nach Anspruch 5, wobei die Neutralisierungs- und Verdünnungsmittel aus Natriumhydrogencarbonat, Apatit, granuliertem Mannit, mikronisierter Cellulose oder anderen Cellulosen, Lactose-Monohydrat, Kaolin, Leucit und Talk ausgewählt wurden.

7. Tablette nach Anspruch 6, wobei das Neutralisierungsmittel Natriumhydrogencarbonat ist, in einem Bereich von 10-70 % (G/G) und die Verdünnungsmittel mikronisierte Cellulose und Lactose-Monohydrat sind, beide in einem Bereich von 10-70 % (G/G).

8. Tablette nach Anspruch 7, wobei das Schmier- bzw. Gleitmittel Polyethylenglykol 6000 ist, in einem Bereich von 1-5 % (G/G).

9. Verfahren zur Herstellung einer bioinsektiziden Formulierung mit toxischer Aktivität gegen Larven zweiflügeliger Insekten, umfassend:
I. Wachstum von *Bacillus thuringiensis* var. *israelensis* mittels Fermentation in einem Wachstumsmedium, in dem die nicht verbrauchten Metaboliten/Nährstoffe nicht schädlich für die Umwelt sind und sie in einem industriellen Maßstab verwendet werden können, wobei dieses Wachstumsmedium einschließt: 1,5-3,0 % (G/G) Amino-Fertile, 1,0-1,5 % (G/G) Soja-Protein, 0,1-0,2 % (G/G) Harnstoff, 0,6-0,8 % (G/G) Mannit, 0,1-0,2 % (G/G) Natriumchlorid und 0,05-0,08 % (G/G) eines Salzgemisches, zusammengesetzt aus 65,1 % (G/G) MgSO₄, 4,4 % (G/G) MnSO₄, 4,4 % (G/G) ZnSO₄, 4,4 % (G/G) FeSO₄, 21,7 % (G/G) CaCl₂,
II. Gewinnung der toxischen Biomasse oder ihrer Sporen oder nur der Endotoxine aus Schritt (I), mittels eines geeigneten Verfahrens zur Rückgewinnung, das in der Lage ist, die toxischen Aktivitäten beizubehalten, ob sie rein sind oder nicht,
III. Sequentielle Zugabe von chemischen Trockenmitteln und anderen Additiven, die Dispergiermittel, Bindemittel/Netzmittel und Schutzmittel gegen Sonnenlicht sind, zu der toxischen Biomasse oder zu ihren Sporen oder zu den Endotoxinen, die in Schritt (II) gewonnen wurden und Dehydratation zwischen der Zugabe der chemischen Trockenmittel in Schritt (III) und der anderen Additive,
IV. Dehydratation der Mischung aus Schritt (III) mittels eines Verfahrens, das in der Lage ist, die toxische Aktivität der Endotoxine beizubehalten, ob sie rein sind oder nicht, um eine Formulierung als ein trockenes Pulver zu erhalten,
V. Optionale Zugabe von Verdünnungsmitteln, Schmier- bzw. Gleitmitteln und Neutralisierungsmitteln zu dem trockenen Pulver aus Schritt (IV), um Tabletten zu erhalten.

10. Verfahren nach Anspruch 9, wobei das Wachstumsmedium einschließt:
I. eine Stickstoffquelle, die eine oder mehrere Substanzen ist, ausgewählt aus der Gruppe, bestehend aus industriellen Resten, die reich an Proteinen sind, Sojaprotein, Harnstoff, Hefeextrakt,
II. eine Kohlenstoffquelle, die eine oder mehrere Substanzen ist, ausgewählt aus der Gruppe, bestehend aus Mannit, Dextrose und Saccharose,
III. eine Mikronährstoffquelle, die ein Salzgemisch ist, das MgSO₄, MnSO₄, FeSO₄, CaCl₂ ist,
IV. Natriumchlorid, um die zelluläre Lebensfähigkeit beizubehalten.

11. Verfahren nach Anspruch 9, wobei die Gewinnung der toxischen Biomasse in Schritt (II) durch Bioseparation mit einem Membran-Vortex durchgeführt wird.

12. Verfahren nach Anspruch 9, wobei die Dehydratation in einem Ofen bei 30 °C durchgeführt wird.

13. Verfahren nach Anspruch 9, wobei die Tabletten durch Drehungspressung erhalten werden.

14. Verfahren nach Anspruch 12, wobei die Zugabe von Schutzmitteln gegen Sonnenlicht mittels eines einfachen Mischens oder durch Überziehen durchgeführt wird.

## Revendications

1. Formulation bioinsecticide comprenant la biomasse des endotoxines obtenues à partir de Bacillus thuringiensis var israelensis (Bti) ayant une activité toxique contre les larves de diptères, ladite formulation étant sous la forme d'une poudre sèche et ayant une activité toxique entre 500 et 1500 ITU (unités toxiques internationales)/mg de poudre sèche et comprenant les additifs suivants :
des sécheurs chimiques choisis parmi la terre de diatomées, la calcite, l'argile, la silice, le kaolin, la diatomite, la bentonite, la dolomite, le phosphate de calcium, la leucite, la montmorillonite et la silice calcinée ;
des agents de dispersion choisis parmi l'alginate de calcium et d'ammonium, l'alginate de sodium, le lactose, la carboxyméthylcellulose ou la méthylcellulose ;
des agents liants/humidifiants choisis parmi le laurylsulfate de sodium, le monoléate de polyoxyéthylène sorbitane et les stéarates de polyoxyéthylène et
de l'EUSOLEX 6007^{R} utilisé comme protecteur contre le rayonnement solaire.

2. Formulation bioinsecticide selon la revendication 1 dans laquelle les sécheurs chimiques sont la diatomite dans une quantité de 0,1 à 10 % en poids, la bentonite dans une quantité de 0,1 à 10 % en poids, le phosphate de calcium dans une quantité de 0,1 à 10 % en poids et la silice calcinée dans une quantité de 0,1 à 10 % en poids.

3. Formulation bioinsecticide selon la revendication 1 dans laquelle l'agent de dispersion est la méthylcellulose à un poids situé dans la gamme de 0,1 à 10 % en poids.

4. Formulation bioinsecticide selon la revendication 1 dans laquelle la quantité de stéarates de polyoxyéthylène présents se situe dans la gamme de 0,1 à 10 % en poids.

5. Comprimé bioinsecticide comprenant 5 à 25 % de la formulation selon la revendication 1 et des agents de neutralisation, de dilution et de lubrification.

6. Comprimé selon la revendication 5 dans lequel les agents de neutralisation et de dilution ont été choisis parmi le bicarbonate de sodium, l'apatite, le mannitol sous forme de granulés, la cellulose micronisée ou d'autres cellulose, le lactose monohydraté, le kaolin, la leucite et le talc.

7. Comprimé selon la revendication 6 dans lequel l'agent de neutralisation est le bicarbonate de sodium dans la gamme de 10 à 70 % en poids et les agents de dilution sont la cellulose micronisée et le lactose monohydraté, tous les deux dans la gamme de 10 à 70 % en poids.

8. Comprimé selon la revendication 7 dans lequel l'agent de lubrification est le polyéthylène glycol 6000 dans la gamme de 1 à 5 % en poids.

9. Procédé de préparation d'une formulation bioinsecticide ayant une activité toxique contre les larves de diptères comprenant les étapes de :
I. faire croître Bacillus thuringiensis var israelensis par fermentation dans un milieu de croissance, où les métabolites/nutriments non-utilisés ne sont pas nocifs pour l'environnement et peuvent être utilisés sur une échelle industrielle, dans lequel le milieu de croissance comprend 1,5 à 3,0 % en poids de fertilisant à base d'azote, 1,0 à 1,5 % en poids de protéine de soja, 0,1 à 0,2 % en poids d'urée, 0,6 à 0,8 % en poids de mannitol, 0,1 à 0,2 % en poids de chlorure de sodium et 0,05 à 0,08 % en poids d'un mélange de sels constitué par 65,1 % en poids de MgSO₄, 4,4 % en poids de MnSO₄, 4,4 % en poids de ZnSO₄, 4,4 % en poids de FeSO₄ et 21,7 % en poids de CaCl_{2 ;}
II. récupérer la biomasse toxique ou ses spores ou seulement les endotoxines provenant de l'étape (I) au moyen d'un procédé approprié de récupération qui est capable de conserver l'activité toxique des endotoxines qu'elles soient pures ou non ;
III. ajouter séquentiellement des sécheurs chimiques et d'autres additifs tels que des agents de dispersion, des agents liants/humidifiants et des protecteurs contre le rayonnement solaire à la biomasse toxique ou à ses spores ou aux endotoxines récupérée(s) dans l'étape (II) et de déshydrater entre le moment de l'ajout des sécheurs chimiques dans l'étape (III) et le moment de l'ajout des autres additifs ;
IV. déshydrater le mélange de l'étape (III) au moyen d'un procédé qui est capable de conserver l'activité toxique des endotoxines qu'elles soient pures ou non afin d'obtenir une formulation se présentant sous la forme d'une poudre sèche ;
V. facultativement ajouter des diluants, des lubrifiants et des agents de neutralisation à la poudre sèche obtenue dans l'étape (IV) afin d'obtenir des comprimés.

10. Procédé selon la revendication 9 dans lequel le milieu de croissance comprend :
I. une source d'azote qui est une ou plusieurs des substances choisies dans le groupe constitué par les résidus industriels riches en protéines, la protéine de soja, l'urée, un extrait de levure ;
II. une source de carbone qui est une ou plusieurs des substances choisies dans le groupe constitué par le mannitol, le dextrose et le saccharose ;
III. une source d'oligoéléments qui est un mélange des sels suivants : MgSO₄, MnSO₄, FeSO₄ et CaCl_{2 ;}
IV. du chlorure de sodium afin de conserver la viabilité cellulaire.

11. Procédé selon la revendication 9 dans lequel la récupération de la biomasse toxique dans l'étape (II) est réalisée par bioséparation au moyen d'un vortex à membranes.

12. Procédé selon la revendication 9 dans lequel la déshydratation est réalisée dans une étuve à 30°C.

13. Procédé selon la revendication 9 dans lequel les comprimés sont obtenus par compression rotative.

14. Procédé selon la revendication 12 dans lequel l'ajout de protecteurs contre le rayonnement solaire est réalisé au moyen d'un simple mélange ou par enduction.
